# EUROPEAN PATENT SPECIFICATION

(11) **EP 4 360 721 B1**
(45) Date of publication and mention of the grant of the patent: **02.07.2025**
(21) Application number: 23206595.3
(22) Date of filing: 30.10.2023
(51) Int. Cl.: A63B 69/12, E04H 4/14, E04H 4/12, C02F 1/78, E04H 4/00, A61H 33/00, C02F 103/42

(54) **EMBEDDED TANK**
EINGEBETTETER TANK
RÉSERVOIR INTÉGRÉ

(30) Priority: 31.10.2022 CN 202211344873
(43) Date of publication of application: 01.05.2024
(73) Proprietor: Guangdong Crystal Island Healthwise Co., Ltd, Foshan Guangdong 528244 (CN)
(72) Inventor: HE, Zhikeng, Foshan, 528244 (CN); LI, Jun, Foshan, 528244 (CN); YANG, Faguo, Foshan, 528244 (CN); WANG, Zhongming, Foshan, 528244 (CN); YU, Guangyang, Foshan, 528244 (CN)
(74) Representative: Chung, Hoi Kan

(56) References cited:
- CN-A- 105 130 061
- CN-A- 107 961 516
- JP-A- H09 271 775
- US-A1- 2020 001 161

## Description

### TECHNICAL FIELD

The present disclosure relates to swimming tanks, and more particularly to an embedded tank.

### BACKGROUND

With the development of economy and the improvement of living standard, people's demand for sports and entertainment consumption is also constantly growing. More and more attention has been paid to keeping health, and thus physical exercise has become an essential part in our daily lives.

Swimming is widely popular since it can help people improve their muscles and vital capacity and relieve lumbar fatigue, without causing damage to joints. Besides, swimming is also a way for cooling in summer. However, regarding a standard swimming pool, its length often reaches dozens of meters, which indicates high construction cost and large water consumption. Moreover, there are many safety and health hazards in the public swimming pool. For a private swimming pool, as limited by space occupation and cost, it can not meet the requirement of long-distance swimming, which greatly affects the user experience.

In view of the above shortcomings, a swimming equipment has been designed, mainly including a small tank, a propeller and a control circuit. The propeller can control the water to flow in a direction opposite to the swimmer, such that the swimmer will be pushed backward by the water flow generated by the propeller and will not move forward when swimming forward. By repeating the above "swimming forward and pushing backward" process, the swimmer can swim in the tank without touching walls.

This kind of swimming equipment is mostly installed in an independent swimming tank with less space occupation. Such swimming equipment is often equipped with a platform for users to rest, below which a control equipment is arranged for controlling water flow speed. Compared to the standard swimming pool, this swimming equipment has a smaller area, and thus water is easy to overflow on the platform to enter the space between the tank body and an external enclosure, damaging the control equipment.

Chinese patent publication No. CN 105130061 A discloses a laminar flow propeller includes a shell, a water tank, a filtering system connected with the water tank and a swimming training system connected with the water tank. The water tank, the filtering system and the swimming training system are arranged in the shell. The filtering system includes a circulating pump, a sand cylinder for filtering and disinfection equipment for sterilizing and disinfecting. A filtering water suction opening of the water tank is connected with a water inlet of a circulating pump. A water outlet of the circulating pump is connected with a water inlet of the sand cylinder. A water outlet of the sand cylinder is connected with the swimming pool. The disinfection equipment is arranged at the water outlet of the sand cylinder and is used for sterilizing and disinfecting water filtered by the sand cylinder.

### SUMMARY

In view of the shortcomings of the prior art, the present disclosure provides an embedded tank, which is provided with an electrical waterproof box and a hydraulic waterproof box to make the mating control circuit apparatus waterproof. At the same time, the electrical waterproof box and the hydraulic waterproof box can automatically discharge the water therein, and prevent the backflow of water from outside. Besides, this application overcomes the problem in the prior art that when the existing swimming equipment is installed in the ground, it usually needs to additionally place a waterproof box. The present disclosure has small space occupation, high integration level, convenient maintenance, low installation requirements and easy construction.

Technical solutions of the present disclosure are described as follows.

The invention is set out in the appended set of claims.

This application provides an embedded tank, comprising:
a tank body; and
a support frame;
wherein the support frame is configured to bear the tank body; a guard plate is provided outside the support frame, and fits the support frame;
each of two sides of a first end of the tank body is provided with a boss structure; and a counter-flow generator is arranged between two boss structures;
a first installation space is provided between one of the two boss structure and the support frame, and a second installation space is provided between the other of the two boss structures and the support frame; the first installation space is provided with a first returned water-filtering system and a hydraulic waterproof assembly; and the second installation space is provided with a second returned water-filtering system and an electrical waterproof assembly;
the hydraulic waterproof assembly includes a hydraulic operation unit, a hydraulic waterproof box and a hydraulic waterproof support; the hydraulic waterproof box and the hydraulic waterproof support are configured to bear the hydraulic operation unit;
the electrical waterproof assembly includes an electrical waterproof support and an electrical waterproof box; the electrical waterproof support and the electrical waterproof box are configured to bear a water disinfection system, an electronic control system, a frequency conversion system and a circulating water pump;
the hydraulic operation unit is connected with the counter-flow generator through a hydraulic oil pipe; and the counterflow generator is communicated with an interior of the tank body; and
the first returned water-filtering system and the second returned water-filtering system are connected with the circulating water pump through a water return pipe; the circulating water pump is connected with the electronic control system through a circulating pipe; the electronic control system is connected with the interior of the tank body through an outlet pipe; the water disinfection system is connected with the outlet pipe through a disinfection pipe; and the frequency conversion system is in electric connection with the electronic control system;
characterized in that a bottom surface of the electrical waterproof box and a bottom surface of the hydraulic waterproof box are each provided with a drainage chamber; the bottom surface of the electric waterproof box and the bottom surface of the hydraulic waterproof box are configured to incline toward the drainage chamber; and the drainage chamber is provided with a water outlet; and
a box body of the electric waterproof box is provided with a first fitting groove, and a box body of the hydraulic waterproof box is provided with a second fitting groove; and the electrical waterproof support fits the first fitting groove, and the hydraulic waterproof support fits the second fitting groove.

In an embodiment, the two sides of the first end of the tank body protrude towards the interior of the tank body to form the two boss structures;
the two boss structures are connected with each other; and the two boss structures are each provided with a shading plate, so that the first end of the tank body forms a shading platform; and
shading plates are configured to be removed to expose a top of the electrical waterproof box and a top of the hydraulic waterproof box to form a maintenance window.

In an embodiment, a platform surface of the shading platform is recessed inwardly to form an installation cavity; the installation cavity is provided with a floor drain; and a bottom surface of the installation cavity is inclined toward the floor drain;
the floor drain is connected with the first returned water-filtering system and the second returned water-filtering system through a floor drain pipe; and
two shading plates are embedded in the first installation cavity and the second installation cavity respectively.

In an embodiment, a second end of the tank body is provided with a stair opposite to the two boss structures.

In an embodiment, the tank body is further provided with an overflow structure or a water circulating structure;
the overflow structure includes an overflow groove and an overflow pipe;
an overflow platform is arranged on a back of an uppermost step of the stair; and a concave cavity is formed between the overflow platform and the tank body, and the concave cavity is configured as the overflow groove;
a bottom of the overflow groove is provided with the floor drain; and a first end of the overflow pipe is connected with the floor drain, and a second end of the overflow pipe is connected with the interior of the tank body; or
the water circulating structure includes a return water device and a water circulating pipe; and
a surface of the stair is provided with the return water device having a mesh structure; and the return water device is connected with a flow-guiding end of the water circulating pipe, and a return end of the water circulating pipe is connected with the interior of the tank body.

The present disclosure has the following beneficial effects.

First, the embedded tank is provided with the electrical waterproof box and the hydraulic waterproof box to make mating control circuit apparatus. At the same time, the electrical waterproof box and the hydraulic waterproof box can automatically discharge the water therein, and prevent the backflow of water from outside.

Second, the shading plate can be removed to expose electrical devices equipped in the tank body to form a maintenance window, which is convenient for installation and maintenance.

Third, the electrical waterproof support and the hydraulic waterproof support are configured to construct the electrical waterproof box and the hydraulic waterproof box, at the same time, they are configured to support the shading platform.

Fourth, the drive assembly arranged on the hydraulic motor is provided with the waterproof sheath, the waterproof guard plate is arranged between the motor cover and waterproof sheath, and the sealing element is arranged on the oil pipe connector, in this way, the waterproof effect and the anti-oil effect of the hydraulic motor of the counterflow generator are improved to a maximum extent; at the same time, it can also ensure that water flow is concentrated and not skewed, and momentum of the water flow is adjustable, which satisfies exercises of professional athletes and the usage experience of consumers with low swimming level.

### BRIEF DESCRIPTION OF THE DRAWINGS

Fig. 1 is a schematic diagram of an embedded tank (with a guard plate) according to an embodiment of the present disclosure;
Fig. 2 is a schematic diagram of the embedded tank (with a support frame exposed) according to an embodiment of the present disclosure;
Fig. 3 is a schematic diagram of an electrical waterproof box, a hydraulic waterproof box and a counterflow generator of the embedded tank (with a water system) according to an embodiment of the present disclosure;
Fig. 4 is a schematic diagram of a returned water-filtering system, a hydraulic operation unit, a disinfection system, an electronic control system, a circulating water pump and the water system according to an embodiment of the present disclosure;
Fig. 5 is a schematic diagram of the returned water-filtering system, the hydraulic operation unit, the disinfection system, the electronic control system, the circulating water pump and the water system according to an embodiment of the present disclosure;
Fig. 6 is a schematic diagram of the counterflow generator according to an embodiment of the present disclosure;
Fig. 7 is a sectional view of the counterflow generator according to an embodiment of the present disclosure along a front-rear direction;
Fig. 8 is a sectional view of the counterflow generator according to an embodiment of the present disclosure along a left-right direction;
Fig. 9 is an exploded view of a hydraulic motor according to an embodiment of the present disclosure;
Fig. 10 is a cross-sectional view of the hydraulic motor according to an embodiment of the present disclosure;
Fig. 11 is a schematic diagram of a shading platform according to an embodiment of the present disclosure;
Fig. 12 is a schematic diagram of the electrical waterproof box according to an embodiment of the present disclosure;
Fig. 13 is a schematic diagram of the hydraulic waterproof box according to an embodiment of the present disclosure;
Fig. 14 is a top view of the hydraulic waterproof box according to an embodiment of the present disclosure;
Fig. 15 is a schematic diagram of the disinfection system, the electronic control system, a frequency conversion system and the circulating water pump according to an embodiment of the present disclosure;
Fig. 16 is a schematic diagram of a tank body with an overflow structure according to an embodiment of the present disclosure; and

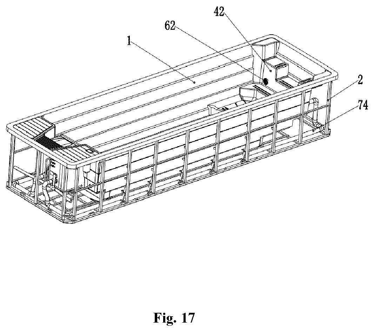

Fig. 17 is a schematic diagram of the tank body with a water circulating structure according to an embodiment of the present disclosure.

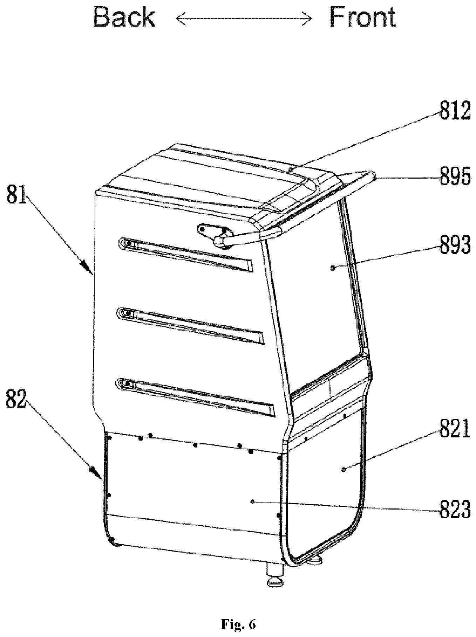

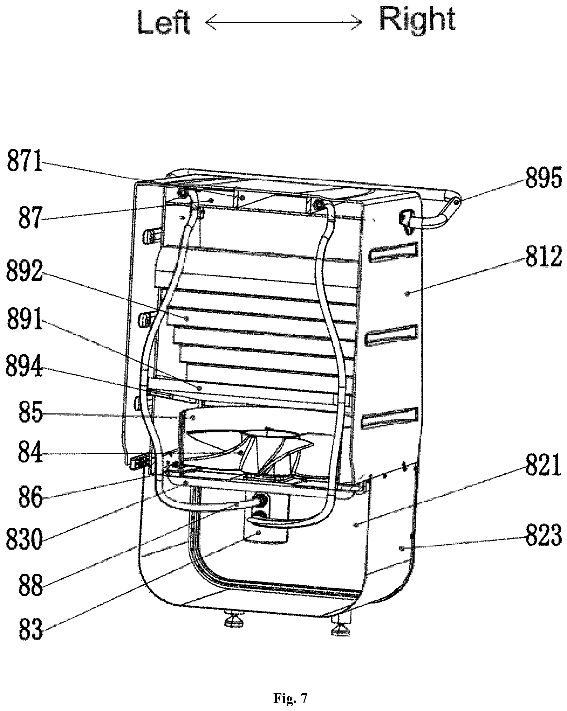

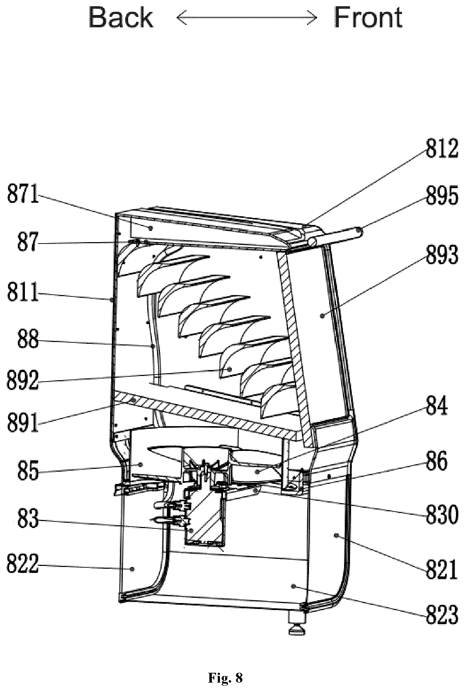

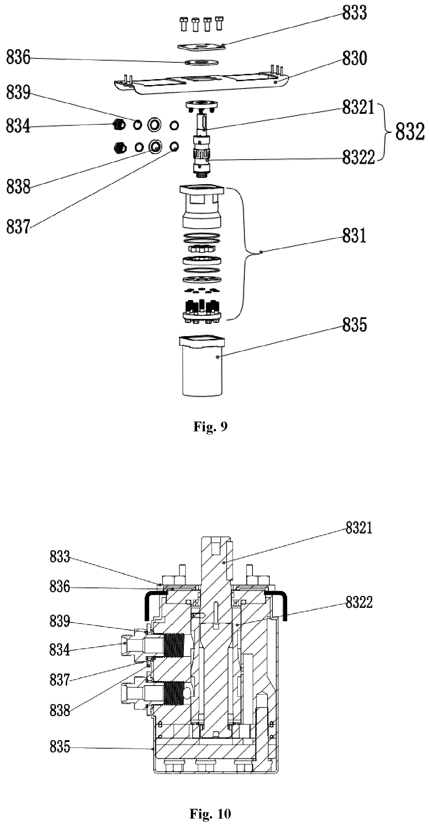

Note: Figs. 6-10 are to be considered merely as examples suitable for understanding the invention.

In the drawings: Tank body 1, Support frame 2, Guard plate 3, Boss structure 41, Shading plate 411, Floor drain 412, Installation cavity 413, Touch panel 414, Stair 42, Frequency conversion system 50, Returned water-filtering system 51, Hydraulic operation unit 52, Disinfection system 53, Electronic control system 54, Circulating water pump 55, Hydraulic waterproof box 56, Electrical waterproof box 57, Drainage chamber 58, Drain outlet 581, Fitting groove 59, Return pipe 61, Return water device 62, Circulating pipe 63, Outlet pipe 64, Disinfection pipe 65, Floor drain pipe 66, Overflow platform 71, Overflow groove 72, Overflow pipe 73, Water circulating pipe 74, Counterflow generator 8, Water discharge chamber 81, Enclosure 811, Housing 812, Water supply chamber 82, Front mesh board 821, Back mesh board 822, Support mesh board 823, Hydraulic motor 83, Motor bracket 830, Drive assembly 831, Motor shaft 832, First main shaft 8324, Second main shaft 8322, Motor cover plate 833, Oil pipe connector 834, Waterproof sheath 835, Waterproof guard plate 836, Inner rubber sealing ring 837, Flat washer 838, Outer rubber sealing ring 839, Impeller 84, Flow guide ring 85, Mounting plate 86, Top plate 87, Support stiffener 871, Hydraulic oil pipe 88, Water supply honeycomb board 891, Flow guide plate 892, Water discharge honeycomb board 893, Slot 894, and Handrail 895.

### DETAILED DESCRIPTION OF EMBODIMENTS

The technical solutions of the present disclosure will be further described below with reference to the embodiments and the accompanying drawings.

It should be understood that, the orientation or position relationship indicated by the terms "up", "down", "left", "right", "vertical", "horizontal", "top", "bottom", "inside", "outside" and so on are based on the orientation or position relationships shown in the accompanying drawings. They are only for simplifying the description of the disclosure, rather than indicating or implying the devices or components must have a particular orientation or be constructed and operated in particular orientation, and therefore can not be understood as a limitation of the disclosure.

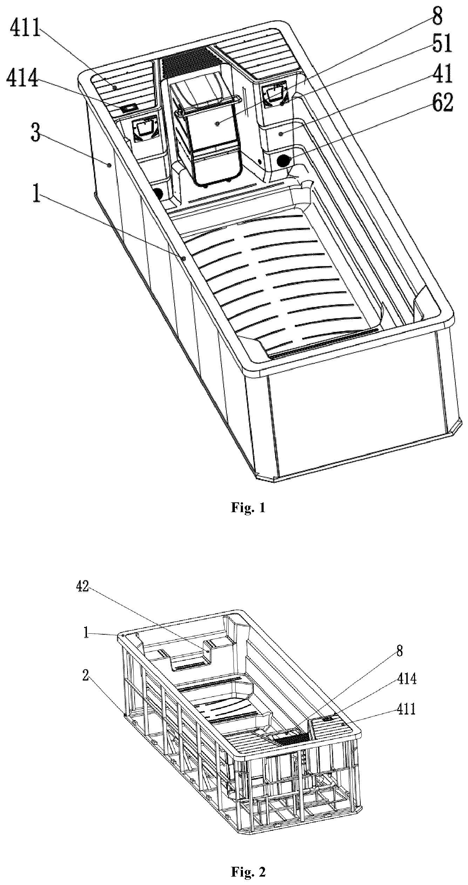

Referring to Figs. 1-2, the present disclosure provides an embedded tank, which includes a tank body 1 and a support frame 2 configured to bear the tank body 1. A guard plate 3 is provided outside the support frame 2, and fits the support frame 2.

In an embodiment, the tank body 1 can be borne by the support frame 2, and a guard plate 3 is provided outside the support frame 2 and fits the support frame 2, in this way, the embedded swimming tank that can be in embedded installation in a ground pit is formed. The guard plate 3 can be designed into an integral plate structure, or can be designed into a plurality of plates that can be spliced with each other, which can be repaired partially by removing the plurality of plates in a local position during maintenance and inspection.

Each of two sides of a first end of the tank body 1 is provided with a boss structure 41, a counterflow generator 8 is arranged between two boss structures 41 at the two sides of the first end of the tank body 1.

In an embodiment, the boss structure 41 can be understood as a platform structure protrudes at each of two corners of the first end of the tank body 1. An installation position for the counterflow generator 8 is reserved in the middle of the two boss structures 41.

The counterflow generator 8 is configured to generate a rush water flow. When the user swims towards a direction of the rush water flow, he can swim within the tank body 1 with the help of an impact force of the water flow.

A first installation space is provided between one of the two boss structures 41 and the support frame 2, and a second installation space is provided between the other of the twp boss structures 41 and the support frame 2. The first installation space is provided with a first returned water-filtering system 51 and a hydraulic waterproof assembly. And the second installation space is provided with a second returned water-filtering system 51 and an electrical waterproof assembly.

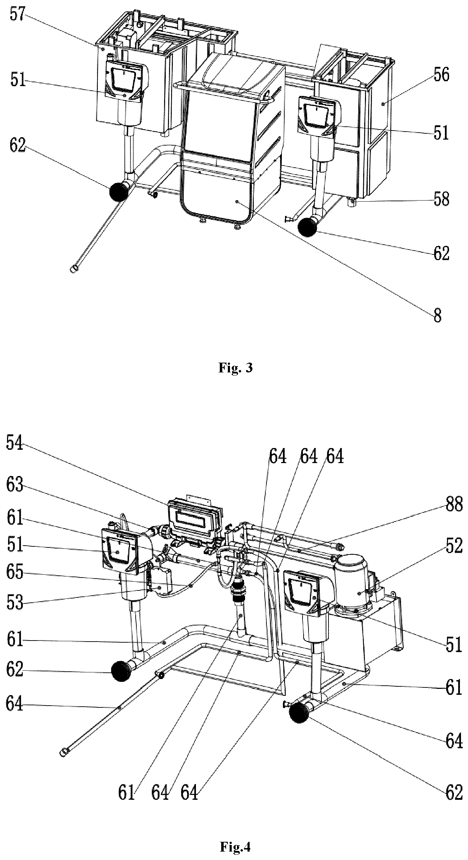

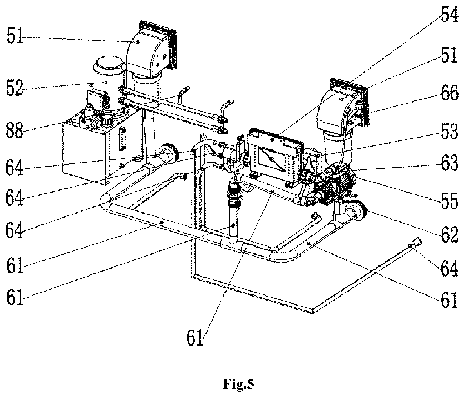

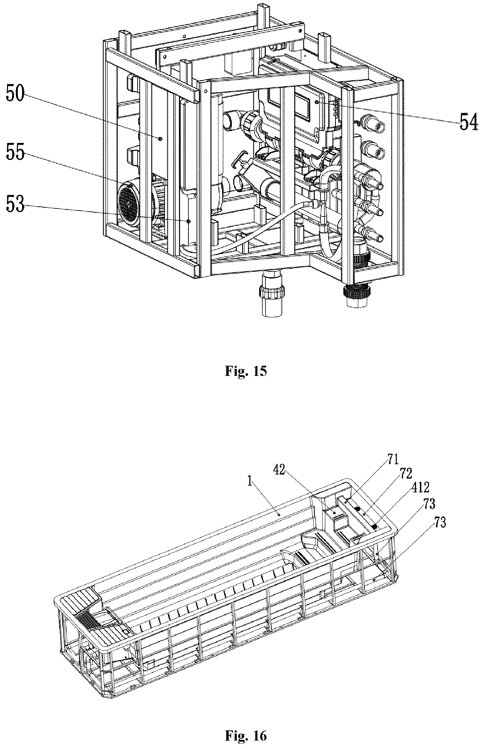

Referring to Figs. 4-5 and 15, the hydraulic waterproof assembly includes a hydraulic operation unit 52, a hydraulic waterproof box 56 for bearing the hydraulic operation unit 52 and a hydraulic waterproof support.

The electrical waterproof assembly includes an electrical waterproof support and an electrical waterproof box 57, the electrical waterproof support and the electrical waterproof box 57 are configured to bear a water disinfection system 53, an electronic control system 54, a frequency conversion system 50 and a circulating water pump 55.

In an embodiment, the returned water-filtering system 51 can be a skimmer, the water disinfection system 53 can be an ozone Venturi tube device, and a disinfection pipe 65 can be an ozone gas pipe. The first installation space and the second installation space are each needed to be provided between the boss structure 41 at the two sides of the end of the tank body 1 and the support frame 2, in order to install the returned water-filtering system 51, the hydraulic waterproof assembly and the electrical waterproof assembly. The first returned water-filtering system and the second returned water-filtering system 51 are provided relative to the two boss structures 41. The returned water-filtering system 51 is configured to draw a water flow and flotsam inside the tank body 1 through the suction action. The water flow is filtered and then is recycled back inside the tank body 1, and the flotsam is retained inside the returned water-filtering system 51 and is waiting to be cleaned to ensure a clean water quality inside the tank body 1.

In an embodiment, in order to prevent a pipe between the support frame 2 and the tank body 1 from being damaged and leaking, resulting in a damage to devices, such as electrical appliances and the hydraulic operation unit 52. The present disclosure provides the electrical waterproof assembly and hydraulic waterproof assembly. The electrical waterproof assembly can be understood as an independent box structure formed by the electrical waterproof support and an electrical waterproof plate. And the hydraulic waterproof assembly can be understood as an independent box structure formed by the hydraulic waterproof support and a hydraulic waterproof plate.

During construction, the electrical waterproof support and the hydraulic waterproof support can be constructed through a rod tube. And the electrical waterproof support and the hydraulic waterproof support can support a platform of the two boss structures 41, which plays a role of supporting the platform.

The hydraulic operation unit 52 is connected with the counterflow generator 8 through a hydraulic oil pipe, and the counterflow generator 8 is connected with an interior of the tank body 1.

The first returned water-filtering system 51 and the second returned water-filtering system 51 are connected with the circulating water pump 55 through the return pipe 61. The circulating water pump 55 is connected with the electronic control system 54 through a circulating pipe 63. The electronic control system 54 is connected with the interior of the tank body 1 through an outlet pipe 64. The water disinfection system 53 is connected with the outlet pipe 64 through the disinfection pipe 65. And the frequency conversion system 50 is in electric connection with the electronic control system 54.

In an embodiment, referring to Figs. 3-5, a pipe system of the tank body 1 is as follows.

The hydraulic operation unit 52 is connected with the counterflow generator 8 through the hydraulic oil pipe, and the hydraulic operation unit 52 mainly provides oil supply services to the counterflow generator 8. And specific pipe connections will be described in the counterflow generator 8 below.

In an embodiment, the first returned water-filtering system 51 and the second returned water-filtering system 51 are provided on left and right respectively. The first returned water-filtering system 51 and the second returned water-filtering system 51 are each provided with a water inlet, and the water inlet is connected with the interior of the tank body 1. At the same time, the first returned water-filtering system 51 and the second returned water-filtering system 51 are each provided with a water outlet, and the water outlet extends to form the return pipe 61. An end of the return pipe 61 is provided with a return water device 62, and the return water device 62 is connected with the interior of the tank body 1. Two return pipe 61 are finally integrated and are centrally connected with the circulating water pump 55 through a tee connection.

In an embodiment, the circulating water pump 55 is connected with the electronic control system 54 through the circulating pipe 63, and the electronic control system 54 achieves control of installed electrical appliances.

The frequency conversion system 50 is in electric connection with the electronic control system 54. In an embodiment, the electronic control system 54 can be controlled by a touch panel 414. The electronic control system 54 controls the frequency conversion system 50 to control a speed of the water flow. And the touch panel 414 is arranged on a plate surface of a shading plate 411.

In an embodiment, a water outlet of the electronic control system 54 is divided into three outlet pipes 64 to discharge water respectively, in which a first outlet pipe 64 and a second outlet pipe 64 are directly connected with the interior of the tank body 1 to achieve direct water discharge from the interior of the tank body 1. A middle part of a third outlet pipe 64 is connected with the water disinfection system 53, that is, the water disinfection system 53 is connected with the third outlet pipe 64 through the disinfection pipe 65 to convey the ozone gas. After connection, the ozone gas will be mixed with water in the third outlet pipe 64, and the water in the third outlet pipe 64 finally flows back to the interior of the tank body 1, in this way, water purification in the tank body 1 is achieved by mixing the ozone gas and the water.

In an embodiment, the returned water-filtering system 51, the water quality antivirus system 53, the frequency conversion system 50, the electronic control system 54 and the circulating water pump 55 are all existing equipment, and will not be described too much here herein.

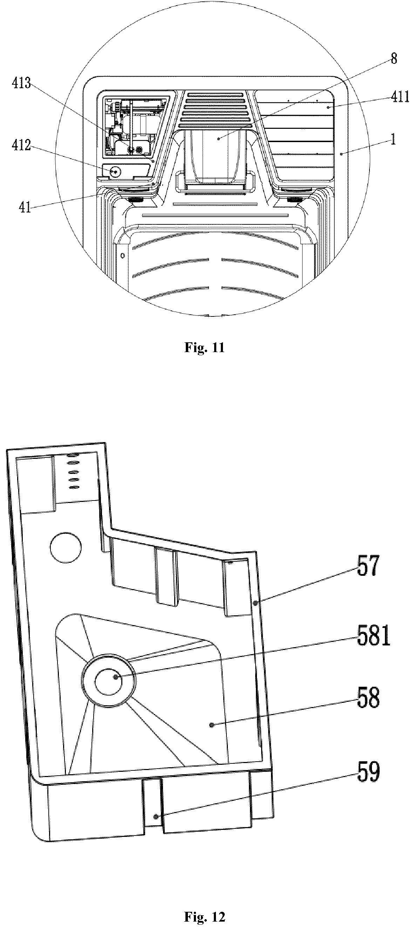

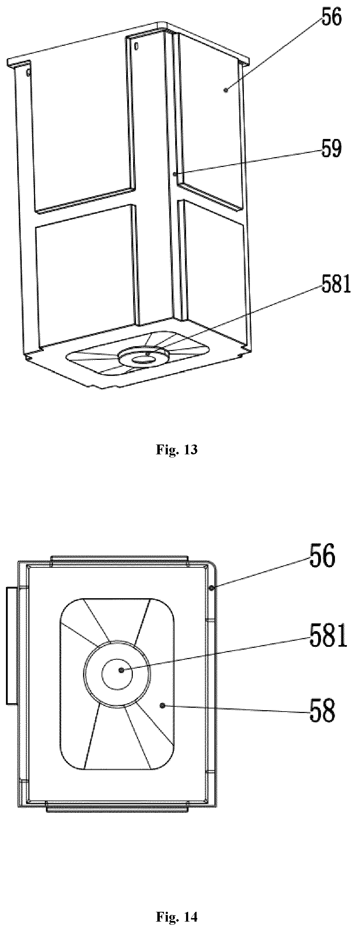

In an embodiment, referring to Figs. 12-14, a bottom surface of the electrical waterproof box 57 and a bottom surface of the hydraulic waterproof box 56 are each provided with a drainage chamber 58. The bottom surface of the electric waterproof box 57 and the bottom surface of the hydraulic waterproof box 56 are configures to incline toward the drainage chamber 58. And the drainage chamber 58 is provided with a drain outlet 581.The drain outlet 581 is provided with a one-way valve, so that the electrical waterproof box 57 and the hydraulic waterproof box 56 can automatically discharge the water therein, and prevent the backflow of water from outside.

A box body of the electric waterproof box 57 is provided with a first fitting groove 59, and a box body of the hydraulic waterproof box 57 is provided with a second fitting groove 59. And the electrical waterproof support fits the first fitting groove 59, and the hydraulic waterproof support fits the second fitting groove 59.

In an embodiment, a bottom of the electrical waterproof box 57 and a bottom of the hydraulic waterproof box 56 are each provided with the drain outlet 581, and the drain outlet 581 can externally connected with a pipe. When water enters in the electrical waterproof box 57 and the hydraulic waterproof box 56, the water can be discharged through the drain outlet 581. In order to facilitate water discharge, in the present disclosure, the bottom surface of the electrical waterproof box 57 and the bottom surface of the hydraulic waterproof box 56 are each provided with a drainage chamber 58. The bottom surface of the electric waterproof box 57 and the bottom surface of the hydraulic waterproof box 56 are configured to incline toward the drainage chamber 58, so that water in the electric waterproof box 57 and the hydraulic waterproof box 56 can flow into the drainage chamber 58 along an inclined slope, and then is discharged from the drain outlet 581.

In an embodiment, the hydraulic waterproof support and the electrical waterproof support can be constructed by a rod tube. In order to enable the hydraulic waterproof support to support the hydraulic waterproof box 56 and the electrical waterproof support to support the electrical waterproof box 57, in the present disclosure, the first fitting groove 59 and the second fitting groove 59 are configured for fixed installation of the rod tube.

In an embodiment, the hydraulic waterproof support and the electrical waterproof support can be configured as an inner frame, and the support frame can be configured as an outer frame. The inner frame is fixed with the outer frame through a support bar to achieve locked fixing of the inner frame and the outer frame. The locked fixing can be achieved by screws or other fixing methods.

In an embodiment, each of the two sides of the first end of the tank body 1 protrude towards the interior of the tank body 1 to form the two boss structures 41.

The two boss structures 41 at the two sides of the tank body 1 are connected with each other and are provided with the shading plate 411, so that a shading platform is formed at the first end of the tank body 1.

The shading plate 411 configured to be removed to expose a top of the electrical waterproof box 57 and a top of the hydraulic waterproof box 56 to form a maintenance window.

In an embodiment, the two boss structures 41 are connected, and the shading plate 411 is arranged on the two boss structures 41, in this way, the two boss structures 41 are transformed into the shading platform for users to sit.

In an embodiment, after removing the shading plate 411, the top of the electrical waterproof box 57 or the top of the hydraulic waterproof box 56 can be exposed to form the maintenance window. When maintaining the electrical appliances and the hydraulic operation unit 52, the electrical appliances can be taken out directly or be taken out with the help of the electrical waterproof support and the hydraulic waterproof support, or directly maintain by reaching into the electrical waterproof box 57 or the hydraulic waterproof box 56. In this way, it's not necessary to remove other accessories to expose the electrical waterproof box 57 and the hydraulic waterproof box 56, which facilitates maintenance and simplifies maintenance process.

In an embodiment, referring to Fig. 11, a platform surface of the shading platform is recessed inwardly to form an installation cavity 413. The installation cavity 413 is provided with a floor drain 412. And a bottom surface of the installation cavity 413 is inclined toward the floor drain 412.

The floor drain 412 is connected with the first returned water-filtering system 51 and the second returned water-filtering through a floor drain pipe 66.

Two shading plates are embedded in the first installation cavity 413 and the second installation cavity 413, respectively.

In an embodiment, the platform surface of the shading platform is recessed inwardly to form the installation cavity 413. The installation cavity 413 is configured to install the shading plate 411, so that the shading plate 411 is configured to be flush with the platform of the shading platform, which is convenient for users to sit. At the same time, owing to the shading plate is a removable structure, water will enter into the installation cavity 413 through installation gap when is rainy or users are swimming. In order to solve the problem, in the present disclosure, the floor drain 412 is provided in the installation cavity 413, and the floor drain 412 can be understood as a concave cavity, which is connected with the returned water-filtering system 51. At the same time, the bottom surface of the installation cavity 413 is inclined toward the floor drain 412, so that water in the installation cavity 413 can flow into the floor drain 412 along a inclined slope, and then flow into the returned water-filtering system 51. Preferably, a second end of the tank body 1 is provided with a stair 42 opposite to the two boss structures 41.

In an embodiment, the tank body 1 is provided with the stair 42 for users to enter the tank body 1, which further enhances his sense of experience.

In an embodiment, the tank body 1 is provided with an overflow structure or a water circulating structure.

The overflow structure includes an overflow groove 72 and an overflow pipe 73.

An overflow platform 71 is arranged on the back of a top of the stair 42. A concave cavity is formed between the overflow platform 71 and the tank body 1, and the concave cavity is formed as the overflow groove 72.

A bottom of the overflow groove 72 is provided with the floor drain 412. An end of the overflow pipe 73 is connected with the floor drain 412. And the other end of the overflow pipe 73 is connected with the interior of the tank body 1.

Or the water circulating structure includes a return water device 62 and a water circulating pipe 74. A surface of the stair 42 is provided with the return water device 62 having a mesh structure. The return water device 62 is connected with a flow-guiding end of the water circulating pipe 74, and a return end of the water circulating pipe 74 is connected with the interior of the tank body 1.

In an embodiment, the overflow structure is arranged on the stair 42. It can be understood that, the stair 42 is moved a certain distance towards the shading platform, and the overflow platform 71 is arranged on an uppermost step of the stair 42. There is a certain distance between the overflow platform 71 and a wall surface of the tank body 1, and a concave cavity is formed in a direction of the tank body within the distance, in this way, the overflow groove 72 is formed.

Owing to the counterflow generator 8 is arranged in a direction of the shading platform. When the counterflow generator 8 is using, a certain water flow fluctuations generated by the counterflow generator 8 and the activity of user inside the tank body 1, which will lead water overflow to an outside of the tank body 1. A main direction of overflow is on the stair 42, therefore, the overflow groove 72 is arranged on the stair 42. When water inside the tank body 1 overflows out of the overflow platform 71, water flow will flow into the overflow groove 72 along a wall of the overflow platform 71, then will flow into the overflow pipe 73 through the floor drain 412 of the overflow groove 72, and then will flow into the interior of the tank body 1 through the overflow pipe 73, in this way, an overflow effect is improved.

In an embodiment, a first end of the overflow pipe 73 is connected with the floor drain 412, and a second end of the overflow pipe 73 is connected with the interior of the tank body 1. The second end of the overflow pipe 73 is connected with the interior of the tank body 1 can be arranged on the tank body 1 at the back of the counterflow generator 8, so that a water flow route of the overflow pipe 73 is extended. In an embodiment, the overflow pipe 73 and the floor drain 412 are arranged in two groups which are arranged in left and right respectively.

In an embodiment, a step surface of the stair 42 is provided with the return water device 62 having a mesh structure which can block the flotsam in the tank body 1 to avoid the flotsam is drew into the circulating pipe through the return water device 62 resulting in pipe block. The return water device 62 is connected with the flow-guiding end of the water circulating pipe 74, and the return end of the water circulating pipe 74 is connected with the interior of the tank body 1. In this embodiment, the return end of the water circulating pipe 74 can be arranged on the tank body 1 at the back of the counterflow generator 8, in this way, a pipe route of the water circulating pipe 74 can be enhanced to the maximum extent, so that water circulation and return water effect are improved.

In an embodiment, the return water device 62 and the water circulating pipe 74 are arranged in two groups which are arranged in left and right respectively. And an installation position for the water circulating pipe 74 is provided between the tank body 1 and the support frame 2.

The following embodiments are to be considered merely as examples suitable for understanding the invention.

In an embodiment, a foaming part is arranged between the guard plate 3 and the tank body 1.

In an embodiment, in order to prevent hard collision between the tank body 1 and the support frame 2 and further improve fixing effect of the tank body 1, the present disclosure provides the foaming part between the guard plate 3 and the tank body 1. The foaming part can be made of conventional insulation foaming material, which can also play a heat insulation effect. In other embodiments, it's not necessary to arrange the foaming part between the tank body 1 and the support frame 2.

In an embodiment, referring to Figs. 6-10, the counterflow generator includes a water discharge chamber 81 assembled by an enclosure 811 and a housing 812 and a water supply chamber 82 formed by a cover with at least one water inlet.

The water discharge chamber 81 is assembled by the enclosure 811 and the housing 812. In an embodiment, the enclosure 811 and the housing 812 can be assembled by clip-on mounting, coulisse butt joint or other removable installation. The water supply chamber 82 includes the at least one water inlet, and the at least one water inlet can be understood as openings on the same surface of the water supply chamber 82. Except for a connection surface connected with the water discharge chamber 81, the openings can be arranged on other five surfaces of the water supply chamber 82 to increase water inflow.

The water supply chamber 82 is provided with a hydraulic motor 83, and an output end of the hydraulic motor 83 is connected with an impeller 84.

A drive assembly 831 of the hydraulic motor 83 is provided with a waterproof sheath 835. A waterproof guard plate 836 is arranged on the output end of the hydraulic motor 83, and an oil pipe connector 834 of the hydraulic motor 83 is provided with a sealing element.

It is easy to cause waterproof problems resulting in electricity leakage and oil leakage, because the hydraulic motor 83 is needed to immersed in water. In order to solve the problems, the present disclosure makes a new design for the hydraulic motor 83, including that the drive assembly 831 of the hydraulic motor 83 is wrapped in the waterproof sheath 835 and the waterproof guard plate 836 is arranged on the output end of the hydraulic motor 83, so that all-round water insulation effect is achieved. At the same time, in order to prevent excessive pressure resulting in oil leakage, the present disclosure provides the sealing element on the oil pipe connector 834 of the hydraulic motor 83.

In an embodiment, the output end of the hydraulic motor 83 is connected with the impeller 84. After the impeller 84 is rotating, water in the water supply chamber 82 is conveyed into an interior of the water discharge chamber 81 by suction force generated by the impeller 84, and then is conveyed outside the tank body 1.

The water discharge chamber 81 is provided with a flow straightening assembly and a one-way water outlet. And the flow straightening assembly is arranged on an output direction of the impeller 84.

In an embodiment, after water is conveyed into the water discharge chamber 81 through the impeller 84, water flow will be guided to the one-way water outlet through the flow straightening assembly, so that water flow with a certain momentum can be output to the interior of the tank body 1, which can form a pushing effect to water flow in the tank body 1.

The hydraulic motor 83 is configured to drive the impeller 84 to rotate to draw the water from the tank body 1 sequentially into the water supply chamber 82 and the water discharge chamber 81. And the water is output to the tank body 1 from the one-way water outlet through the flow straightening assembly, so as to form a water circulation.

In an embodiment, a water circulation process generated by the counterflow generator can be understood that, the hydraulic motor 83 provides power to rotate the impeller 84 to draw the water flow in the tank body 1, so that the water flow in the tank body 1 is conveyed into the water discharge chamber 81 from the water supply chamber 82, and finally be re-output into the interior of the tank body 1 from the one-way water outlet through leading of the flow straightening assembly.

In an embodiment, the hydraulic motor 83 includes the drive assembly 831, a motor shaft 832 and a motor cover plate 833.

The drive assembly 831 is wrapped by the waterproof sheath 835.

A first end of the motor shaft 832 is provided in the drive assembly 831, and a second end of the motor shaft 832 is configured as an output end to be connected with the impeller 84.

The motor cover plate 833 is arranged on an end of the waterproof sheath 835. And a connection between the motor cover plate 833 and the waterproof sheath 835 is provided with the waterproof guard plate 836.

In an embodiment, the hydraulic motor 83 mainly includes the drive assembly 831, the motor shaft 832 and the motor cover plate 833. The drive assembly 831 can be an existing driving structure, which is configured to rotate the motor shaft 832 to drive the impeller 84 connected with the impeller 84 to rotate.

In an embodiment, the motor shaft 832 is designed as a shaft composited with the hydraulic motor 83, which includes a first main shaft 8321 and a second main shaft 8322. The first main shaft 8321 and the second main shaft 8322 are made of stainless steel or carbon steel. And an end of the first main shaft 8321 is arranged in the second main shaft 8322 to form a composite connection structure.

In an embodiment, the drive assembly 831 is wrapped with the waterproof sheath 835 to prevent water entering in the drive assembly 831. At the same time, the motor 832 is connected with the impeller 84 through the motor cover plate 833. The motor cover plate is configured to cover the drive assembly 831 to achieve all-round waterproof for the drive assembly 831. And the waterproof guard plate 836 is provided between the motor cover plate 833 and the waterproof sheath 835, so that a seamless sealing is formed between the second main shaft 8322 of the motor shaft 832 and the motor cover plate 833.

In an embodiment, the waterproof sheath 835 is provided with an oil inlet and an oil outlet, and the oil inlet and the oil outlet are each provided with the oil pipe connector 834. An oil pipe connector 834 of the oil inlet and an oil pipe connector 834 of the oil outlet are connected with the hydraulic oil pipe respectively, and the hydraulic oil pipe is connected the hydraulic operation unit 52, so that the hydraulic operation unit 52 can provide power to the counterflow generator 8.

A connection between the oil pipe connector 834 and the oil inlet and a connection between the oil pipe connector and the oil outlet are each provided with the sealing element.

The sealing element includes an inner rubber sealing ring 837, an outer rubber sealing ring 839 and a flat washer 838 clamped between the inner rubber sealing ring 837 and the outer rubber sealing ring 839.

In an embodiment, the waterproof sheath 835 is provided with the oil inlet and the oil outlet, and the oil inlet and the oil outlet are each provided with the oil pipe connector 834. Through a connection between the oil pipe connector and the hydraulic oil pipe 88, an effect of oil supply and oil discharge for the drive assembly 831 can be achieved to ensure a driving of the drive assembly 831.

It is easy to cause oil leakage because an oil pressure of the oil pipe connector 834 is too high. Therefore, the present disclosure provides the sealing element on the oil pipe connector 834. The sealing element includes the outer rubber sealing ring 839 and the flat washer 838 which are provided on an outside of the waterproof sheath 835, and the inner rubber sealing ring 837 provided inside the waterproof sheath 835. And a sealing of the oil pipe connector 834 is achieved through the inner rubber sealing ring 837 and the outer rubber sealing ring 839 to ensure that the oil pipe connector will not leak.

In an embodiment, the water discharge chamber 81 is provided with a top plate 87. A pipe laying space is formed between the top plate 87 and an upper end of the housing 812. And a support stiffener 871 is arranged in the pipe laying space.

In an embodiment, the top plate 87 is arranged at an upper part of a space where the water discharge chamber is located, at the same time, the pipe laying space is reserved from the housing 812. The support stiffener 871 is arranged in an interior of the pipe laying space. An upper end of the support stiffener 871 is connected with the housing 812, and a lower end of the support stiffener 871 is connected with the top plate 87, which provide a supporting and strengthening effect.

A mounting plate 86, the top plate 87 and the enclosure 811 are each provided with a pipe laying opening. And the oil pipe connector 834 is provided with the hydraulic oil pipe 88 and the hydraulic oil pipe 88 is fixed along the pipe laying opening successively.

In an embodiment, in order to hide a routing of the hydraulic oil pipe 88. The mounting plate 86, the top plate 87 and the enclosure 811 are each provided with the pipe laying opening. And the hydraulic oil pipe includes an oil inlet pipe and an oil outlet pipe. The oil inlet pipe and the oil outlet pipe run through the mounting plate 86, the top plate 87 and the enclosure 811 from bottom to top to form a vertical routing.

In an embodiment, the mounting plate 86 is fixedly provided between the water supply chamber 82 and the water discharge chamber 81. A plate surface of the mounting plate 86 is provided with a mounting port, and an edge of the mounting port is circumferentially provided with a flow guide ring 85.

The hydraulic motor 83 is fixed on a lower plate surface of the mounting plate 86 through a motor bracket 830, so that the impeller 84 runs through the mounting port to be arranged in the flow guide ring 85.

In an embodiment, the mounting plate is configured to separate the water supply chamber 82 and the water discharge chamber 81. At the same time, the mounting plate provides an installation position for the flow guide ring 85 and the impeller 84, and the hydraulic motor 83 is fixed through the motor bracket 830.

In an embodiment, a periphery of the impeller 84 is circumferentially provided with the flow guide ring 85. When the impeller is rotating, it provides rotating force to draw water flow from the water supply chamber 82 and the water flow is conveyed into the water discharge chamber 81 after concentrated diversion of the flow guide ring 85.

In an embodiment, the flow straightening assembly includes a water supply honeycomb board 891, a straightening plate and a water discharge honeycomb board 893.

The water supply honeycomb board 891 is arranged above the impeller 84, and a plurality of straightening plates are provided across an upper end of the water supply honeycomb board 891.

The water discharge honeycomb board 893 is arranged on the one-way water outlet, and the water discharge honeycomb board 893 is perpendicular to the water supply honeycomb board 891.

The plurality of straightening plates guide water flow in the water supply honeycomb board 891 to the water discharge honeycomb board 893.

In an embodiment, after water flow passes through the impeller 84 from the water supply chamber 82, it will first pass through filtration and drainage of the water supply honeycomb board 891, at this time, the water flow has a certain momentum. A direction of the momentum is vertical before it reaches the plurality of straightening plates. The direction of the momentum is changed toward a direction of the water discharge honeycomb board 893 through the plurality of straightening plates after it reaches the plurality of straightening plates. That is, the plurality of straightening plates are configured to guide water flow in vertical direction to horizontal direction to ensure that water flow can be conveyed to the tank body 1 from the water discharge honeycomb board 893.

In an embodiment, the plurality of straightening plates each includes multiple flow guide plates 892, and a cross section of each of the multiple flow guide plates 892 is an arc structure with a radian.

The plurality of flow guide plates 892 are in successively sloping arrangement from top to bottom, and direct contact surfaces of the multiple flow guide plates and water flow are arranged from a direction of the water supply honeycomb board 891 to the direction of the water discharge honeycomb board 893.

In an embodiment, the plurality of straightening plates each includes the plurality of flow guide plates 892, each of the plurality of flow guide plates 892 are transverse arranged between the water discharge chamber 81 from left to right. At the same time, the plurality of flow guide plates 892 are in successively sloping arrangement from top to bottom to form a stair structure. And there are gaps between each of the plurality of flow guide plates 892.

At the same time, the cross section of each of the plurality of flow guide plates 892 is the arc structure, which can be understood as a crescent shape, so that a direction of water flow can be changed after it rush through a concave surface of the each of the plurality of flow guide plates 892, and then the water flow flows to the water discharge honeycomb board 893 from gaps between the plurality of flow guide plates 892.

In an embodiment, a slot 894 is arranged in an interior of the housing 812. And the water supply honeycomb board 891 is slidably arranged in the slot 894, so that the water supply honeycomb board 891 is removably arranged above the impeller 84.

In an embodiment, a water supply honeycomb board 891 can be designed as a removable structure. In an embodiment, the slot 894 is formed at two sides of the interior of the housing 812, and the slot 894 can be formed by two guide blocks with a channel. And an installation can be achieved by simply inserting two sides of the water supply honeycomb board 891 along the slot 894.

In an embodiment, the water supply honeycomb board 891 can be designed as a structure that the water supply honeycomb board 891 and the interior of the housing 812 are integrally formed.

In an embodiment, the cover includes a front mesh board 821, a back mesh board 822 and a support mesh board 823. A middle part of the support mesh board 823 is concave to form a U-shaped structure. And the front mesh board 821 and the back mesh board 822 are fixed on two sides of the support mesh board 823 successively front and back.

In an embodiment, five surfaces of the water supply chamber 82 can each be connected with the tank body 1 through the front mesh board 821, the back mesh board 822 and the support mesh board 823, which can maximize water flow rate. At the same time, water in the tank body 1 can be filtered to remove the flotsam when it is conveyed into the water supply chamber 82 by utilizing a filtration effect of an otter board structure. In this way, the impeller 84 can be prevent from flotsam which may damage the impeller 84.

In an embodiment, the housing 812 is provided with a handrail 895.

The handrail 895 is configured to provide a support position for swimmers, which further enhanced a sense of use.

The technical principle of this application has been described above with reference to embodiments. It should be understood that the above description is only used to explain the principle of the disclosure, and cannot be interpreted as the limitation to the protection scope of the disclosure in any way. Therefore, other embodiments obtained by those skilled in the art based on the content disclosed herein without making creative effort shall fall within the scope of this disclosure defined by the appended claims.

## Claims

1. An embedded tank, comprising:
a tank body (1); and
a support frame (2);
wherein the support frame (2) is configured to bear the tank body (1); a guard plate (3) is provided outside the support frame (2), and fits the support frame (2);
each of two sides of a first end of the tank body (1) is provided with a boss structure (41); a counterflow generator (8) is arranged between two boss structures (41);
a first installation space is provided between one of the two boss structures (41) and the support frame (2), and a second installation space is provided between the other of the two boss structures (41) and the support frame (2); the first installation space is provided with a first returned water-filtering system and a hydraulic waterproof assembly; and the second installation space is provided with a second returned water-filtering system and an electrical waterproof assembly;
the hydraulic waterproof assembly comprises a hydraulic operation unit (52), a hydraulic waterproof box (56) and a hydraulic waterproof support; the hydraulic waterproof box (56) and the hydraulic waterproof support are configured to bear the hydraulic operation unit (52);
the electrical waterproof assembly comprises an electrical waterproof support and an electrical waterproof box (57); the electrical waterproof support and the electrical waterproof box (57) are configured to bear a water disinfection system (53), an electronic control system (54), a frequency conversion system (50) and a circulating water pump (55);
the hydraulic operation unit (52) is connected with the counterflow generator (8) through a hydraulic oil pipe; and the counterflow generator (8) is communicated with an interior of the tank body (1); and
the first returned water-filtering system and the second returned water-filtering system are connected with the circulating water pump (55) through a water return pipe (61); the circulating water pump (55) is connected with the electronic control system (54) through a circulating pipe (63); the electronic control system (54) is connected with the interior of the tank body (1) through an outlet pipe (64); the water disinfection system (53) is connected with the outlet pipe (64) through a disinfection pipe (65); and the frequency conversion system (50) is in electric connection with the electronic control system (54);
**characterized in that** a bottom surface of the electrical waterproof box (57) and a bottom surface of the hydraulic waterproof box (56) are each provided with a drainage chamber (58); the bottom surface of the electrical waterproof box (57) and the bottom surface of the hydraulic waterproof box (56) are configured to incline toward the drainage chamber (58); and the drainage chamber (58) is provided with a water outlet; and
a box body of the electrical waterproof box (57) is provided with a first fitting groove, and a box body of the hydraulic waterproof box (56) is provided with a second fitting groove; and the electrical waterproof support fits the first fitting groove, and the hydraulic waterproof support fits the second fitting groove.

2. The embedded tank according to claim 1, **characterized in that** the two sides of the first end of the tank body (1) protrude towards the interior of the tank body (1) to form the two boss structures (41);
the two boss structures (41) are connected with each other; and the two boss structures (41) are each provided with a shading plate (411), so that the first end of the tank body (1) forms a shading platform; and
shading plates (411) are configured to be removed to expose a top of the electrical waterproof box (57) and a top of the hydraulic waterproof box (56) to form a maintenance window.

3. The embedded tank according to claim 2, **characterized in that** a platform surface of the shading platform is recessed inwardly to form an installation cavity (413); the installation cavity (413) is provided with a floor drain (412); and a bottom surface of the installation cavity (413) is inclined toward the floor drain (412);
the floor drain (412) is connected with the first returned water-filtering system and the second returned water-filtering system through a floor drain pipe (66);
two shading plates (411) are embedded in the first installation cavity (413) and the second installation cavity (413), respectively; and
a second end of the tank body (1) is provided with a stair (42) opposite to the two boss structures (41).

4. The embedded tank according to claim 3, **characterized in that** the tank body (1) is further provided with an overflow structure or a water circulating structure;
the overflow structure comprises an overflow groove (72) and an overflow pipe (73);
an overflow platform (71) is arranged on a back of an uppermost step of the stair (42); and a concave cavity is formed between the overflow platform (71) and the tank body (1), and the concave cavity is configured as the overflow groove (72);
a bottom of the overflow groove (72) is provided with the floor drain (412); and a first end of the overflow pipe (73) is connected with the floor drain (412), and a second end of the overflow pipe (73) is connected with the interior of the tank body (1); or
the water circulating structure comprises a return water device (62) and a water circulating pipe (74); a surface of the stair (42) is provided with the return water device (62) having a mesh structure; and the return water device (62) is connected with a flow-guiding end of the water circulating pipe (74), and a return end of the water circulating pipe (74) is connected with the interior of the tank body (1).

## Patentansprüche

1. Bodenbündiger Tank, umfassend:
einen Tankkörper (1);
und einen Stützrahmen (2);
wobei der Stützrahmen (2) so konfiguriert ist, dass er den Tankkörper (1) trägt; eine Schutzplatte (3) außerhalb des Stützrahmens (2) vorgesehen ist und an den Stützrahmen (2) passt;
jede von zwei Seiten eines ersten Endes des Tankkörpers (1) mit einer Boss-Struktur (41) versehen ist; ein Gegenstromgenerator (8) zwischen zwei Boss-Strukturen (41) angeordnet ist;
ein erster Einbauraum zwischen einer der beiden Boss-Strukturen (41) und dem Stützrahmen (2) vorgesehen ist, und ein zweiter Einbauraum zwischen der anderen der beiden Boss-Strukturen (41) und dem Stützrahmen (2) vorgesehen ist;
der erste Einbauraum mit einem ersten Rücklaufwasserfiltersystem und einer hydraulischen wasserdichten Baugruppe versehen ist; und der zweite Einbauraum mit einem zweiten Rücklaufwasserfiltersystem und einer elektrischen wasserdichten Baugruppe versehen ist;
die hydraulische wasserdichte Baugruppe eine hydraulische Betriebseinheit (52), einen hydraulischen wasserdichten Kasten (56) und einen hydraulischen wasserdichten Träger umfasst; der hydraulische wasserdichte Kasten (56) und der hydraulische wasserdichte Träger so gestaltet sind, dass sie die hydraulische Betriebseinheit (52) tragen;
die elektrische wasserdichte Baugruppe umfasst einen elektrischen wasserdichten Träger und einen elektrischen wasserdichten Kasten (57); der elektrische wasserdichte Träger und der elektrische wasserdichte Kasten (57) so konfiguriert sind, dass sie ein Wasserdesinfektionssystem (53), ein elektronisches Steuersystem (54), ein Frequenzumwandlungssystem (50) und eine Wasserumwälzpumpe (55) tragen;
die hydraulische Betriebseinheit (52) mit dem Gegenstromgenerator (8) durch eine Hydraulikölleitung verbunden ist; und
der Gegenstromgenerator (8) mit einem Innenraum des Tankkörpers (1) verbunden ist; und das erste Rücklaufwasserfiltersystem und das zweite Rücklaufwasserfiltersystem mit der Wasserumwälzpumpe (55) über eine Wasserrücklaufleitung (61) verbunden sind; die Wasserumwälzpumpe (55) mit dem elektronischen Steuersystem (54) durch eine Umwälzleitung (63) verbunden ist; das elektronische Steuersystem (54) mit dem Inneren des Tankkörpers (1) durch eine Auslassleitung (64) verbunden ist; das Wasserdesinfektionssystem (53) mit der Auslassleitung (64) durch eine Desinfektionsleitung (65) verbunden ist; und das Frequenzumwandlungssystem (50) in elektrischer Verbindung mit dem elektronischen Steuersystem (54) steht;
**dadurch gekennzeichnet, dass** eine Bodenfläche des elektrischen wasserdichten Kastens (57) und eine Bodenfläche des hydraulischen wasserdichten Kastens (56) jeweils mit einer Drainagekammer (58) versehen sind; die Bodenfläche des elektrischen wasserdichten Kastens (57) und die Bodenfläche des hydraulischen wasserdichten Kastens (56) so konfiguriert sind, dass sie sich zur Drainagekammer (58) neigen; und die Drainagekammer (58) mit einem Wasserauslass versehen ist; und
ein Gehäusekörper des elektrischen wasserdichten Kastens (57) mit einer ersten Einbaunut versehen ist und ein Gehäusekörper des hydraulischen wasserdichten Kastens (56) mit einer zweiten Einbaunut versehen ist; und der elektrische wasserdichte Träger in die erste Einbaunut passt und der hydraulische wasserdichte Träger in die zweite Einbaunut passt.

2. Bodenbündiger Tank nach Anspruch 1, **dadurch gekennzeichnet, dass** die beiden Seiten des ersten Endes des Tankkörpers (1) in das Innere des Tankkörpers (1) ragen, um die beiden Boss-Strukturen (41) zu bilden; die beiden Boss-Strukturen (41) miteinander verbunden sind; und die beiden Boss-Strukturen (41) jeweils mit einer Abschattungsplatte (411) versehen sind, so dass das erste Ende des Tankkörpers (1) eine Abschattungsplattform bildet; und die Abschattungsplatten (411) so konfiguriert sind, dass sie entfernt werden können, um eine Oberseite des elektrischen wasserdichten Kastens (57) und eine Oberseite des hydraulischen wasserdichten Kastens (56) freizulegen, um ein Wartungsfenster zu bilden.

3. Bodenbündiger Tank nach Anspruch 2, **dadurch gekennzeichnet, dass** eine Plattformoberfläche der Abschattungsplattform nach innen vertieft ist, um einen Installationshohlraum (413) zu bilden; der Installationshohlraum (413) mit einem Bodenabfluss (412) versehen ist; und eine Bodenfläche des Installationshohlraums (413) in Richtung des Bodenabflusses (412) geneigt ist; der Bodenabfluss (412) mit dem ersten Rücklaufwasserfiltersystem und dem zweiten Rücklaufwasserfiltersystem durch ein Bodenabflussrohr (66) verbunden ist; zwei Abschattungsplatten (411) in den ersten Installationshohlraum (413) bzw. den zweiten Installationshohlraum (413) eingebettet sind; und ein zweites Ende des Tankkörpers (I) mit einer Treppe (42) gegenüber den beiden Boss-Strukturen (41) versehen ist.

4. Bodenbündiger Tank nach Anspruch 3, **dadurch gekennzeichnet, dass** der Tankkörper (1) ferner mit einer Überlaufstruktur oder einer Wasserzirkulationsstruktur versehen ist; wobei die Überlaufstruktur eine Überlaufrille (72) und ein Überlaufrohr (73) umfasst; eine Überlaufplattform (71) auf der Rückseite einer obersten Stufe der Treppe (42) angeordnet ist; und ein konkaver Hohlraum zwischen der Überlaufplattform (71) und dem Tankkörper (1) ausgebildet ist, und der konkave Hohlraum als die Überlaufrille (72) konfiguriert ist; ein Boden der Überlaufrille (72) mit dem Bodenabfluss (412) versehen ist; ein Boden der Überlaufrille (72) mit dem Bodenablauf (412) versehen ist; und ein erstes Ende des Überlaufrohrs (73) mit dem Bodenablauf (412) verbunden ist, und ein zweites Ende des Überlaufrohrs (73) mit dem Inneren des Tankkörpers (I) verbunden ist; oder die Wasserzirkulationsstruktur eine Rücklaufwassereinrichtung (62) und ein Wasserzirkulationsrohr (74) umfasst; eine Oberfläche der Treppe (42) mit der Rücklaufwasservorrichtung (62) versehen ist, die eine Maschenstruktur aufweist; und die Rücklaufwasservorrichtung (62) mit einem strömungsführenden Ende des Wasserzirkulationsrohrs (74) verbunden ist, und ein Rücklaufende des Wasserzirkulationsrohrs (74) mit dem Inneren des Tankkörpers (1) verbunden ist.

## Revendications

1. Un réservoir encastré, comprenant:
un corps de réservoir (1); et
un cadre de support (2);
dans lequel le cadre de support (2) est conçu pour soutenir le corps de réservoir (1); une plaque de protection (3) est disposée à l'extérieur du cadre de support (2) et s'ajuste au cadre de support (2);
chaque côté de la première extrémité du corps de réservoir (1) est doté d'une structure de bossage (41); un générateur de contre-courant (8) est disposé entre les deux structures de bossage (41);
un premier espace d'installation est prévu entre l'une des deux structures de bossage (41) et le cadre de support (2), et un deuxième espace d'installation est prévu entre l'autre des deux structures de bossage (41) et le cadre de support (2), le premier espace d'installation est équipé d'un premier système de filtration de retour d'eau et d'un ensemble étanche hydraulique; et le deuxième espace d'installation est équipé d'un deuxième système de filtration de retour d'eau et d'un ensemble étanche électrique;
l'ensemble étanche hydraulique comprend une unité d'opération hydraulique (52), une boîte étanche hydraulique (56) et un support étanche hydraulique, la boîte étanche hydraulique (56) et le support étanche hydraulique sont conçus pour soutenir l'unité d'opération hydraulique (52);
l'ensemble étanche électrique comprend un support étanche électrique et une boîte étanche électrique (57), le support étanche électrique et la boîte étanche électrique (57) sont conçus pour soutenir un système de désinfection de l'eau (53), un système de commande électronique (54), un système de conversion de fréquence (50) et une pompe à eau de circulation (55);
l'unité d'opération hydraulique (52) est connectée au générateur de contre-courant (8) par un tuyau d'huile hydraulique, et le générateur de contre-courant (8) est en communication avec l'intérieur du corps de réservoir (1); et
le premier système de filtration de retour d'eau et le deuxième système de filtration de retour d'eau sont connectés à la pompe à eau de circulation (55) par un tuyau de retour d'eau (61) ; la pompe à eau de circulation (55) est connectée au système de commande électronique (54) par un tuyau de circulation (63), le système de commande électronique (54) est connecté à l'intérieur du corps de réservoir (1) par un tuyau de sortie (64), le système de désinfection de l'eau (53) est connecté au tuyau de sortie (64) par un tuyau de désinfection (65); et le système de conversion de fréquence (50) est en liaison électrique avec le système de commande électronique (54);
**caractérisé en ce que** la surface inférieure de la boîte étanche électrique (57) et la surface inférieure de la boîte étanche hydraulique (56) sont chacune dotées d'une chambre de drainage (58); la surface inférieure de la boîte étanche électrique (57) et la surface inférieure de la boîte étanche hydraulique (56) sont conçues pour s'incliner vers la chambre de drainage (58); et la chambre de drainage (58) est dotée d'une sortie d'eau, et
le corps de la boîte étanche électrique (57) est doté d'une première rainure d'ajustement, et le corps de la boîte étanche hydraulique (56) est doté d'une deuxième rainure d'ajustement, et le support étanche électrique s'ajuste à la première rainure d'ajustement, et le support étanche hydraulique s'ajuste à la deuxième rainure d'ajustement.

2. Le réservoir encastré selon la revendication 1, **caractérisé en ce que** les deux côtés de la première extrémité du corps de réservoir (1) font saillie vers l'intérieur du corps de reservoir (1) pour former les deux structures de bossage (41);
les deux structures de bossage (41) sont connectées l'une à l'autre, et les deux structures de bossage (41) sont chacune dotées d'une plaque d'ombrage (411), de sorte que la première extrémité du corps de réservoir (1) forme une plateforme d'ombrage; et
les plaques d'ombrage (411) sont conçues pour être retirées afin d'exposer le dessus de la boîte étanche électrique (57) et le dessus de la boîte étanche hydraulique (56) pour former une fenêtre d'entretien.

3. Le réservoir encastré selon la revendication 2, **caractérisé en ce que** la surface de la plateforme d'ombrage est enfoncée vers l'intérieur pour former une cavité d'installation (413); la cavité d'installation (413) est dotée d'un drain de sol (412); et la surface inférieure de la cavité d'installation (413) est inclinée vers le drain de sol (412);
le drain de sol (412) est connecté au premier système de filtration de retour d'eau et au deuxième système de filtration de retour d'eau par un tuyau de drain de sol (66);
les deux plaques d'ombrage (411) sont encastrées respectivement dans la première cavité d'installation (413) et la deuxième cavité d'installation (413); et
la deuxième extrémité du corps de réservoir (1) est dotée d'un escalier (42) opposé aux deux structures de bossage (41).

4. Le réservoir encastré selon la revendication 3, **caractérisé en ce que** le corps de réservoir (1) est également doté d'une structure de débordement ou d'une structure de circulation d'eau;
la structure de débordement comprend une gouttière de débordement (72) et un tuyau de débordement (73);
une plateforme de débordement (71) est disposée sur l'arrière du dernier marche de l'escalier (42), et une cavité concave est formée entre la plateforme de débordement (71) et le corps de réservoir (1), et la cavité concave est conçue comme la gouttière de débordement (72);
le fond de la gouttière de débordement (72) est doté du drain de sol (412), et une première extrémité du tuyau de débordement (73) est connectée au drain de sol (412), et une deuxième extrémité du tuyau de débordement (73) est connectée à l'intérieur du corps de réservoir (1); ou
la structure de circulation d'eau comprend un dispositif de retour d'eau (62) et un tuyau de circulation d'eau (74); une surface de l'escalier (42) est équipée du dispositif de retour d'eau (62) ayant une structure en maille, et le dispositif de retour d'eau (62) est connecté à l'extrémité de guidage d'écoulement du tuyau de circulation d'eau (74), et une extrémité de retour du tuyau de circulation d'eau (74) est connectée à l'intérieur du corps de réservoir (1).
